# EUROPEAN PATENT APPLICATION

(11) **EP 4 606 840 A2**
(43) Date of publication of application: **27.08.2025**
(21) Application number: 25180457.1
(22) Date of filing: 08.03.2023
(51) Int. Cl.: C08G 71/04

(54) **ISOCYANATE-FREE POLYURETHANE AND ISOCYANATE-FREE POLYURETHANE-CONTAINING POLYMERIC FILM PRODUCTION METHOD**

(62) Divisional of application: 23160814.2
(71) Applicant: CHT Turkey Kimya Sanayi ve Ticaret A.S., 34522 Istanbul (TR)
(72) Inventor: AKBULUT, HUSEYIN, Istanbul (TR)
(74) Representative: Yavuzcan, Alev

(57) **Abstract**

In particular, the invention relates to a method for the production of isocyanate-free polyurethane having anionic and cationic properties by forming of strong ionic bonds between oppositely charged polymeric structures by neutralizing polymerizable acid or tertiary amine functional monomers and synthesizing water-based and ultraviolet (UV) curable non-isocyanate polyurethane and polyurethane derivatives in aqueous media, and an isocyanate-free polyurethane-containing polymeric film production method for obtaining an ultraviolet curable isocyanate-free polyurethane-based cross-linked polymeric film after thermal drying and improving mechanical properties of the obtained film.

## Description

### Technical Field

The invention relates to a method for the production of isocyanate-free polyurethane which enables the synthesis of non-isocyanate polyurethane and polyurethane derivatives with anionic and cationic properties in aqueous media, and a method for the production of isocyanate-free polyurethane-containing polymeric films.

In particular, the invention relates to a method for the production of isocyanate-free polyurethane having anionic and cationic properties by forming of strong ionic bonds between oppositely charged polymeric structures by neutralizing polymerizable acid or tertiary amine functional monomers and synthesizing water-based and ultraviolet (UV) curable non-isocyanate polyurethane and polyurethane derivatives in aqueous media, and an isocyanate-free polyurethane-containing polymeric film production method for obtaining an ultraviolet curable isocyanate-free polyurethane-based cross-linked polymeric film after thermal drying and improving mechanical properties of the obtained film.

### State of the Art

Polyurethanes (PUs) are the foremost polymeric materials with broad application properties, used in many applications such as sponges, adhesives, elastomers, coatings and fibers. The chemistry and history of polyurethane is nearly a century old, but the main processes and synthetic mechanisms remain unchanged. Most commercially used polyurethanes are currently prepared by polyaddition, a polymerization reaction that allows polymer formation by independent single reactions between polyisocyanates and polyols. Isocyanate derivatives are hazardous to human and environmental health due to toxicity and the fact that isocyanate is synthesized mostly by reaction between primary amines and extremely toxic phosgene or chloroformates. Non-isocyanate/non-containing polyurethanes (NIPU) contain the same advantages as conventional polyurethanes (PU), but are much more harmless and offer improved performance compared to conventional polyurethanes. For this reason, it is one of the important topics of academic and industrial research to replace traditional isocyanates.

Hydrogen bonds formed in conventional isocyanate-based polyurethane synthesis cause the viscosity to increase throughout the reaction, making it impossible to continue the reaction. Therefore, conventional systems require the use of solvents or cosolvents to keep the reaction going. In solvent-based systems, special systems and measurements are needed to remove the solvent from the aqueous dispersion after the reaction. On the other hand, almost all cosolvents that modify the physical properties of the polymer coating obtained in co-solvent-supported systems remain in the final product and cannot be eliminated from the aqueous dispersion. At this point, the most important advantage of isocyanate-free polyurethane systems is that they make it possible to synthesize polyurethane in water. In contrast to isocyanate systems, the 5-membered cyclic carbonate derivatives used in isocyanate-free urethane systems allow the synthesis of urethane in water. However, the major disadvantage of isocyanate-free polyurethanes obtained by the reaction of cyclic carbonate and amines is that it is not possible to obtain urea bonds, which significantly change the flexibility, durability and other physical properties of the coating obtained with this system. In conventional polyurethane systems using isocyanates, the combination of urethane-urea bonds on the same polymeric structure is only possible by changing the type of amine or the ratio of hydroxy-functionalized intermediates in the reaction. However, in isocyanate-free systems, only urethane coupling with cyclic carbonates and amines can be achieved. This is the biggest obstacle to obtaining the same properties with isocyanate-free systems as with coatings obtained with the isocyanate system.

One of the most well-known synthetic approaches to obtain non-isocyanate polyurethanes is the stepwise growth of polyaddition between 5-membered cyclic carbonas and diamines to obtain poly(hydroxyurethanes) (PHUs). However, the low reactivity of conventional 5-membered cyclic carbonates prevents the production of high molecular weight poly(hydroxyurethane). At the same time, this polymerization is quite costly and superbase catalysts such as 1,8-Diazabicyclo[5.4.0]undec-7-ene (DBU) or Triazabicyclodecene (TBD) superbases are difficult to obtain. In addition, the synthesis of polyurethane with isocyanate requires the use of solvent and this solvent must be removed after the reaction by special measures or by using cosolvent, which cannot be separated from the final product after the reaction, because of the hydrogen bonds formed prevent the reaction from proceeding. In addition, the isocyanate process enables the combination of urethane and urea bonds located on the same polymer, offering flexibility and durability. However, since it is not possible to form urea bonds with cyclic carbonates, it is almost impossible to achieve the properties mentioned above in non-isocyanate systems. For this reason, further modifications are needed to obtain non-isocyanate polyurethanes, which allow the mechanical properties to be improved.

In patent document CN101775137A, an aqueous non-isocyanate polyurethane and a method for preparing this aqueous non-isocyanate polyurethane are disclosed. The water-based non-isocyanate polyurethane obtained by the mentioned method is a water-soluble wax obtained by the ring opening reaction of a prepolymer functionalized with cyclic carbonate and a di or polyamine compound. It is obtained by radical polymerization of cyclic carbonate functional prepolymer compound and hydrophilic unsaturated monomer. In order to prepare an aqueous non-isocyanate polyurethane, an organic solvent such as methanol, ethanol, propanol, isopropanol, acetone is used. Cyclic carbonate-based monomers, hydrophilic unsaturated monomers, free radical initiators, molecular weight modifiers, unsaturated monomers for performance regulation are added for the reaction. After the reaction, deionized water is added to adjust the solid content to 80%, finally, di or polyamine compound is added to the prepolymer dispersion and kept at 25-110 °C to obtain an aqueous non-isocyanate polyurethane dispersion. The document does not mention a solution to obtain non-isocyanate polyurethane derivatives with anionic and cationic properties, water-based and UV curable, and to synthesize these polyurethanes in water without the use of any cosolvent or surface-active additives.

Another patent document CN111378126A of the known art discloses a method of preparing an isocyanate-free polyurethane prepolymer. An isocyanate-free polyurethane prepolymer obtained by the mentioned method is a water-based, light-curable type of polyurethane and reduces the use of isocyanate-type polyurethane. Non-isocyanate polyurethane prepolymer is cured using acrylate, a light initiator and the like under certain conditions to form a coating film on the surface of a material. Tetrahydrofuran, pyromelitic dianhydride, glycerol carbonate and 4-lutidine are used for the preparation of the mentioned non-isocyanate polyurethane prepolymer and the first product is obtained in the first step. In the reflux heating reactor, reactions of monoallyl phthalate, N,N-dimethylformamide, butyltriphenylphosphonium bromide and epichlorohydrin compounds are carried out and then dichloromethane and sodium hydroxide solution are added to obtain the second product. To the dimethylformamide (DMF) solution, the first and second products, benzyltriethylammonium chloride, 2,6-di-tertbutyl- 4-methylphenol compounds, 40 ml of ethyl acetate was added and the third product was obtained by washing with potassium carbonate aqueous solution and distilled water. The third product can react with diamine derivatives such as ethylenediamine, 1,3-propanediamine, 1,4-butanediamine, 1,4-butanediamine, 1,5-pentanediamine, 1,5-pentanediamine, 1,6-hexanediamine, p-phenylenediamine, o-phenylenediamine, m-phenylenediamine, piperazine, azodiamine and conjugated unsaturated alkyl diamine to obtain non-isocyanate polyurethane prepolymer. The document does not mention a solution to obtain non-isocyanate polyurethane derivatives with anionic and cationic properties, water-based and UV curable, and to synthesize these polyurethanes in water without the use of any cosolvent or surface-active additives.

As a result, there is a need to develop an isocyanate-free polyurethane and isocyanate-free polyurethane-containing polymeric film production method that enables synthesis without the use of any cosolvent or surface-active additives, having strong ionic bonds are formed between oppositely charged polymeric structures to obtain water-based and ultraviolet (UV) curable non-isocyanate polyurethane derivatives with anionic and cationic properties by neutralizing polymerizable acid or tertiary amine functional monomers, and a polymeric film whose mechanical properties are improved by ultraviolet curing and strong ionic interaction using this method.

### Purpose of the Invention

The present invention relates to a method for producing isocyanate-free polyurethane and isocyanate-free polyurethane-containing polymeric films which meets the above-mentioned requirements, eliminates possible disadvantages and provides some additional advantages.

The main purpose of the isocyanate-free polyurethane production method subject to the invention is to obtain an isocyanate-free polyurethane production method that enables obtaining non-isocyanate polyurethane derivatives with anionic and cationic properties, water-based and UV-curable, and synthesizing these polyurethanes in water without the use of any cosolvent or surface-active additive.

Another object of the invention is to provide an isocyanate-free polyurethane production method that enables the formation of strong ionic bonds between oppositely charged polymeric structures by neutralizing polymerizable acid or tertiary amine functional monomers, thereby providing water-based and ultraviolet (UV) curable non-isocyanate polyurethane derivatives with anionic and cationic properties.

Another object of the invention is to provide a method for the production of isocyanate-free polyurethane which enables the neutralization of ionic bicyclic carbonate derivatives obtained as intermediates in the dispersion of non-isocyanate polyurethane, together with polymerizable tertiary amine functional monomers of anionic composition and acid functional polymerizable monomers of cationic composition.

Another object of the invention is to provide a method for the production of isocyanate-free polyurethane which, after ultraviolet curing of neutralized agents, enables the formation of strong ionic interactions between oppositely charged polymeric structures on the film.

A further object of the invention is to provide an isocyanate-free polyurethane production method which enables the polymerization cost to be reduced and the polymerization process to be facilitated.

Another object of the invention is to provide an isocyanate-free polyurethane production method which enables the production of water-based and ultraviolet-curable non-isocyanate polyurethane derivatives which are not harmful to the environment and human health.

Another object of the invention is to provide a method for the production of isocyanate-free polyurethane which enables the easy synthesis of water-soluble anionic bicyclic carbonate functional intermediate in the synthesis of isocyanate-free polyurethane at low temperatures.

Another object of the invention is to provide a method for the production of isocyanates which enables the reactions of anionic bicyclic carbonates and sterically unhindered amines to be carried out in water.

Another object of the invention is to provide an isocyanate production method which enables to increase the production capacity, quantity and variety of uses while reducing the production time and cost.

Another object of the invention is to provide an ultraviolet (UV) curable isocyanate-free polyurethane-based cross-linked polymeric film and to provide a method of producing an isocyanate-free polyurethane-containing polymeric film which improves the mechanical properties of the obtained film.

Another object of the invention is to provide an isocyanate-free polyurethane-containing polymeric film production method which enables to increase the production capacity, quantity and variety of usage areas while reducing the production time and cost.

Isocyanate-free polyurethane production method, which enables the production of water-based isocyanate-free polyurethane derivatives with anionic and cationic properties and synthesis without the use of cosolvent and/or surface-active additives in order to achieve the above objectives in the most general form, formation of ester bonds and synthesis of the reaction in volatile solvent; evaporation of the solvent in the aqueous mixture and obtaining an aqueous solution of anionic bicyclic carbonate functionalized intermediate; formation of urethane bonds and synthesis of the structure containing urethane and secondary amines; production of bicyclic carbonate functionalized intermediate; neutralization of tertiary amine groups on the obtained intermediate with polymerizable acid to obtain aqueous solution of cationic bicyclic carbonate functionalized intermediate; polymerization of mono, di or multifunctional sterically unhindered primary amines, oligomeric or water soluble or insoluble polymeric amines in water; following the reaction steps in the anionic isocyanate-free polyurethane production process and obtaining the cationic polyurethane dispersion.

The polymeric film production method of isocyanate-free polyurethane-containing polymeric film developed with the present invention, which enables obtaining polymeric film and improving the mechanical properties of the obtained film, includes the steps of adding photoinitiator additive, acrylate/methacrylate-based crosslinkers and amine tertiary-containing agent; forming two oppositely charged polymeric layers by applying ultraviolet radiation curing and improving the mechanical properties of the obtained film by increasing the ionic interaction.

The structural and characteristic features and all advantages of the invention will be more clearly understood by means of the figures given below and the detailed description written by making references to these figures, and therefore, the evaluation should be made by considering these figures and detailed description.

### Detailed Description of the Invention

In this detailed description, preferred embodiments of the inventive isocyanate-free polyurethane and isocyanate-free polyurethane-containing polymeric film production method are described only for the purpose of a better understanding of the subject matter.

An isocyanate-free polyurethane production method, developed with the present invention, which enables to obtain water-based isocyanate-free polyurethane derivatives with anionic and cationic properties and to synthesize the obtained isocyanate-free polyurethanes in water without the use of cosolvents and/or surface-active additives, the formation of ester bonds by nucleophilic tertiary amine allowing the anhydride ring to be opened through the hydroxy group of glycerol carbonate and the synthesis of the reaction in a volatile solvent, preferably acetone, with a boiling point temperature lower than water evaporation of the solvent in the aqueous mixture obtained after completion of the reaction using ambient temperature to obtain an aqueous solution of anionic bicyclic carbonate functionalized intermediate for isocyanate synthesis; reaction of polyamines containing multi-functional secondary amine and sterically unhindered amine to form urethane bonds and synthesize the structure containing urethane and secondary amines; reaction of secondary amine with acrylated glycerol carbonate to produce bicyclic carbonate functionalized intermediate; neutralization of tertiary amine groups on the resulting intermediate with polymerizable acid, preferably metaacrylic acid, to obtain an aqueous solution of cationic bicyclic carbonate functional intermediate for isocyanate synthesis; polymerization in water of mono, di- or multifunctional sterically unhindered primary amines, oligomeric or water-soluble or insoluble polymeric amines; following the reaction steps of the previous anionic isocyanate-free polyurethane production process and obtaining the cationic polyurethane dispersion.

In an exemplary embodiment of the aqueous cationic polymer emulsion developed with the present invention, water-soluble anionic bicyclic carbonate functional intermediate for the synthesis of isocyanate-free polyurethane can be easily synthesized at low temperature values thanks to the catalytic effect of polymerizable tertiary amine functional monomers. An example synthesized process is shown on Graph-1.

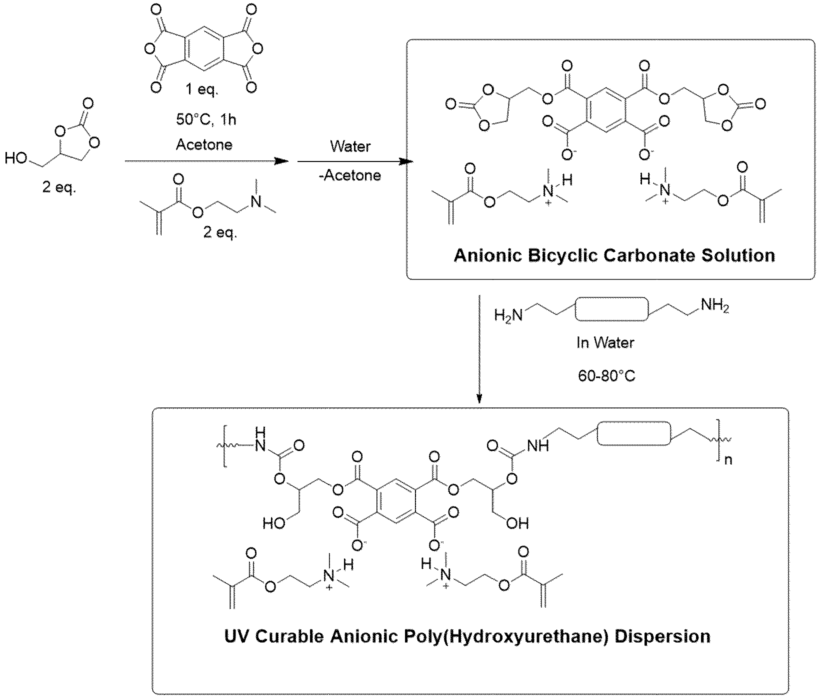

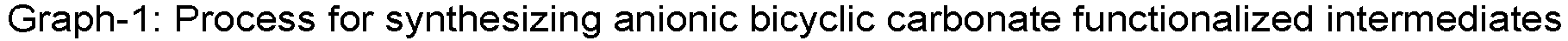

For this purpose, ester bonds are established by allowing the anhydride ring of the nucleophilic tertiary amine to open through the hydroxy group of glycerol carbonate. The reaction is synthesized in a volatile solvent such as acetone, which has a lower boiling point than water. The solvent in the aqueous mixture obtained after the reaction is evaporated using ambient temperature and anionic bicyclic carbonate functional aqueous solution is produced as an intermediate for isocyanate synthesis. The reactions of the obtained anionic bicyclic carbons and sterically unhindered amines are carried out in water.

In order to obtain the water-soluble cationic bicyclic carbonate functional intermediate for the synthesis of isocyanate-free polyurethane in water, multi-functional secondary amine and sterically unhindered amine-containing polyamines are reacted. In this way, urethane bonds are formed and the structure containing urethane and secondary amines is synthesized. Subsequently, bicyclic carbonate functional intermediate is produced by the reaction of secondary amine and acrylated glycerol carbonate via Michael addition reaction and the tertiary amine groups on the obtained intermediate are neutralized by polymerizable acids such as metaacrylic acid. Thus, an aqueous solution of cationic bicyclic carbonate functionalized intermediate for isocyanate synthesis is obtained. Polymerization of amine species selected from mono, di or multifunctional sterically unhindered primary amines, oligomeric or water-soluble or water-insoluble polymeric amines in water is achieved. Finally, the same reaction steps as in the previous anionic isocyanate-free polyurethane production process are applied to obtain an ultraviolet curable cationic polyurethane dispersion. For example, in the method shown in Graph-2, since it is not possible for the secondary amines of Teriethylenetetetramine (TETA) to react with carbonate groups without the catalysts mentioned above, Teriethylenetetetramine (TETA) and Ethylene carbonate, the sterically unhindered primary amine of Teriethylenetetetramine, react selectively with ethylene carbonates to form the urethane bond.

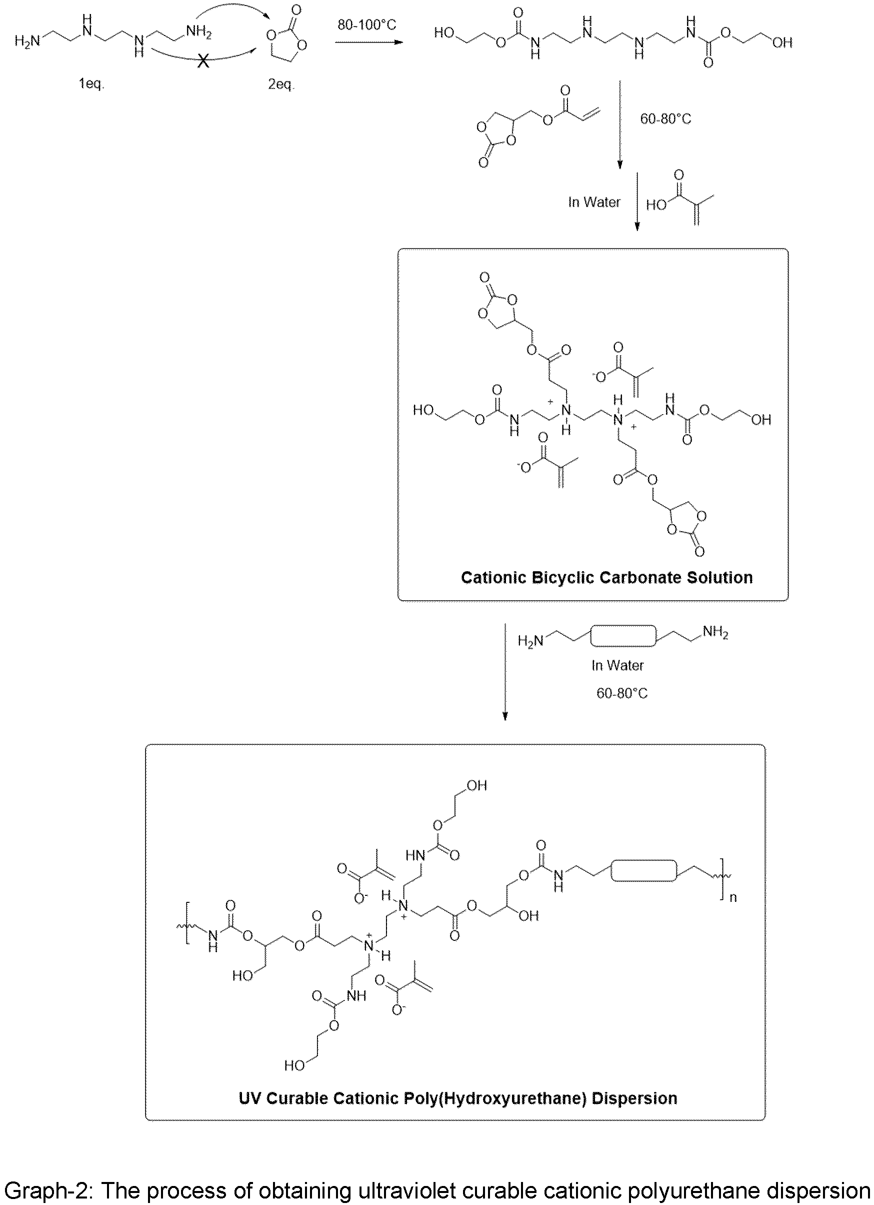

Mono, di or multifunctional sterically unhindered primary amines, oligomeric or polymeric water-soluble or insoluble amines can be used as amines for the polymerization reaction in water. Due to the strong ionic properties of anionic bicyclic carbonates, phase separation occurs at the beginning of the reaction. However, when bicyclic carbonates and amines react, the phase separates and a homogeneous reaction mixture is obtained. In the case of the use of secondary amines or sterically hindered primary amines such as Jeffamine (polyoxyalkylenepolyamine) derivatives, the reaction yield is considerably reduced and the polymerization is not possible without well-known catalysts such as ,8-Diazabicyclo [5.4.0] undec-7-ene (DBU) or 1,5,7-Triazabicyclo [4.4.0] dec-5-ene (TBD) which are largely unsuitable for production. The aforementioned catalysts used for the reaction with cyclic carbonate are also in the class of superbases that cause polymer decomposition over time.

In another preferred embodiment of the invention, mono, di- or multifunctional sterically unhindered primary amines, oligomeric or water-soluble or insoluble polymeric amines are selected from ethylene diamine, 1,3-Diaminopropane, 1,3-Pentanediamine, 1,13-Diamino-4,7,10-trioxatridecane, 2,2'-(Ethylenedioxy)bis(ethylamine), 1,11-Diamino-3,6,9-trioxaundecane, 1,8-Diamino-3,6-dioxaoctane, 2-[2-(2-Aminoethoxy)ethoxy]ethanol, 2-(2-Aminoethoxy)ethylamine, NH2-PEG4-NH2, Poly(ethylene glycol) diamine derivatives, Hexamethylenediamine, Triethylenetetramine, Diethylenetriamine, 1,1,1-Tris(aminomethyl)ethane, Polyethylenimine derivatives, Poly(dimethylsiloxane) bis(3-aminopropyl) terminated, bio-based dimer diamines and all related primary amine terminated structures but is not limited.

The synthetic strategy disclosed in the present invention to produce UV curable anionic or cationic polyurethane dispersions can easily be diversified to limitless derivatives by changing the ratios and types of components mentioned above, the solid content of the obtained dispersions. Additionally, the diversification of products can also be achieved by mixing commercially available UV crosslinkers and other types of products and all compositions of the present invention can be polymerized using thermal radical initiator or redox polymerization technics.

A method of producing a polymeric film comprising isocyanate-free polyurethane, preferably suitable for use in coating application, which is UV curable after thermal drying, and which enables to obtain isocyanate-free polyurethane-based cross-linked polymeric film and to improve the mechanical properties of the obtained film, Adding a photoinitiator additive, acrylate/methacrylate based crosslinkers and amine tertiary containing agent to anionic and cationic isocyanate-free polyurethane obtained by the mentioned isocyanate-free polyurethane production method; the formation of two oppositely charged polymeric layers by polymerization of neutralization agents by curing under ultraviolet light, preferably under daylight, and the improvement of the mechanical properties of the film obtained by increasing the ionic interaction between the oppositely charged layers, preferably durability and flexibility.

In another preferred embodiment of the invention, the neutralization agents are selected from methacrylate functional agents to eliminate the possibility of Michael addition reaction with acrylate moiety during polyurethane synthesis with primary amine derivatives. The neutralization are accomplished with methacrylate functional tertiary amine, carboxylic acids or other acids/bases such as 2-N-Morpholinoethyl methacrylate, 2-Diisopropylaminoethyl methacrylate, N-[3-(N,N-Dimethylamino)propyl] methacrylamide, , N-[2-(N,N-Dimethylamino)ethyl] methacrylamide, 2-(N,N-Dimethylamino)ethyl methacrylate, 2-(N,N-Diethylamino)ethyl methacrylate, , 2-(tert-Butylamino)ethyl methacrylate, , 2-(N,N-Dimethylamino)ethyl methacrylate, Beta-Carboxyethyl methacrylate, 2-Sulfoethyl methacrylate, Methacrylic acid, Phosphorus-Based Poly(meth)acrylates and all related monomers but is not limited. It should be noted that all type of inorganic and organic acids and bases also can be used in neutralization step but is not limited.

In another preferred embodiment of the invention, di-functional activated carboxylic acids use in the synthesis of anionic embodiments are selected from Di-anhydride derivatives such as 3,3',4,4'-Benzophenonetetracarboxylic dianhydride, 4,4'-Biphthalic Anhydride, 3,4,9,10-Perylenetetracarboxylic 3,4:9,10-dianhydride, Cyclobutane-1,2,3,4-tetracarboxylic dianhydride, 3,3',4,4'-Biphenyltetracarboxylic dianhydride, Benzophenone-3,3',4,4'-tetracarboxylic dianhydride, Bicyclo[2.2.2]oct-7-ene-2,3,5,6-tetracarboxylic dianhydride, 1,4,5,8-Naphthalenetetracarboxylic dianhydride, Tetrahydrofuran-2,3,4,5-tetracarboxylic Acid, Pyromellitic dianhydride, Perylene-3,4,9,10-tetracarboxylic dianhydride, 4,4'-Oxydiphthalic anhydride, 4,4'-(4,4'-Isopropylidenediphenoxy) bis(phthalic anhydride), and all related dianhydride derivatives but is not limited.

Combination of two oppositely charged polymers is impossible in conventional water-based dispersion systems. Because when two oppositely charged polymers are combined, they lose their water solubility due to the strong ionic interaction with each other and precipitation will occur suddenly. However, the method disclosed in the present invention allows the obtaining of coating system which has oppositely charged two different polymers after UV curing.

The UV curable compositions of the present invention are capable of undergoing polymerization reaction by UV light exposure in the presence of non-limiting photoinitiators. The compositions of the present invention and their possible modifications, substitutions and derivatives as UV curable anionic/cationic Polyurethane dispersions have clear potential to find applications in any type of sectors and not intended to be exhaustive or to limit the invention to the precise forms or applications.

In another preferred embodiment of the invention, photoinitiators are selected from Michler's ketone, anthraquinone, acridine, phenazine, benzophenone, Rose Bengal, Eosine, Erythrosine, Hexaarylbiimidazole, p-dialkylamino benzylidene ketone, 3-ketocoumarin, 4-thiazolidinone, 1-indanone, Riboflavin, Eosin-Y, Carboxylated Camphorquinone Acetophenone, Anisoin, Anthraquinone, Anthraquinone-2-sulfonic acid, sodium salt monohydrate, (Benzene) tricarbonylchromium, Benzil, Benzoin, Benzoin ethyl ether, Benzoin isobutyl ether, Benzoin methyl ether, Benzophenone, Benzophenone/1-Hydroxycyclohexylphenyl ketone, 1-Hydroxycyclohexyl phenyl ketone, 3,3',4,4'-Benzophenonetetracarboxylic dianhydride, 4-Benzoylbiphenyl, 2-Benzyl-2-(dimethylamino)-4'-morpholinobutyrophenone, 4,4'-Bis(diethylamino)benzophenone, 4,4'-Bis(dimethylamino)benzophenone, Camphorquinone, 2-Chlorothioxanthen-9-one, (Cumene) cyclopentadienyliron(II) hexafluorophosphate, Dibenzosuberenone, 2,2-Diethoxyacetophenone, 4,4'-Dihydroxybenzophenone, 2,2-Dimethoxy-2-phenylacetophenone, 4-(Dimethylamino)benzophenone, 4,4'-Dimethylbenzil, 2,5-Dimethylbenzophenone, 3,4-Dimethylbenzophenone, Diphenyl(2,4,6trimethylbenzoyl)phosphine oxide / 2-Hydroxy-2-methylpropiophenone, 4'-Ethoxyacetophenone, Diphenyl(2,4,6 trimethylbenzoyl)phosphine oxide, Ethylanthraquinone, Ferrocene, 3'-Hydroxyacetophenone, 4'-Hydroxyacetophenone, 3-Hydroxybenzophenone, 4-Hydroxybenzophenone, 1-Hydroxycyclohexyl phenyl ketone, 2-Hydroxy-2-methylpropiophenone, 2-Hydroxybenzophenone, 3-Methylbenzophenone, Methybenzoylformate, 2-Methyl-4'-(methylthio)-2-morpholinopropiophenone, Phenanthrenequinone, 4'-Phenoxyacetophenone, Thioxanthen-9-one, Triarylsulfonium hexafluoroantimonate salts, Triarylsulfonium hexafluorophosphate salts, 2-Hydroxy-2-methyl-1- phenyl-1-propanone, 2-Hydroxy-1-[4-(2-hydroxyethoxy)phenyl]-2-methyl-1-propanone, Methylbenzoylformate, oxy-phenyl-acetic acid 2-[2 oxo-2 phenyl-acetoxy-ethoxy]-ethyl ester and oxy-phenyl-acetic 2-[2-hydroxy-ethoxy]-ethyl ester, Alpha, alpha-dimethoxy-alpha-phenylacetophenone, 2-Benzyl-2-(dimethylamino)-1-[4- (4-morpholinyl) phenyl]-1-butanone, 2-Methyl-1-[4-(methylthio)phenyl]-2-(4-morpholinyl)-1-propanone, Diphenyl (2,4,6-trimethylbenzoyl)- phosphine oxide, Phosphine oxide, phenyl bis (2,4,6-trimethyl benzoyl), Bis (eta 5-2,4-cyclopentadien-1-yl) Bis [2,6-difluoro-3-(1H-pyrrol-1-yl) phenyl]titanium, lodonium, (4-methylphenyl) [4-(2-methylpropyl) phenyl]- hexafluorophosphate(1-) and all possible mixture of photoinitiator and their modifications but it is not limited.

### Example-1

### The Synthesis of Anionic Bicyclic Carbonate Solution:

100g of Pyromellitic Dianhydride, 144g of Dimethylaminoethyl Methacrylate (DMAEMA), 110g of Glycerol Carbonate and 350g of acetone were placed to reaction vessel equipped with a cooling condenser. Then, mixture stirred at 70°C until all anhydride peaks disappeared in FTIR. After reaction completed, 350g or water was added to the mixture and acetone was distilled at 50°C from the dispersion with vacuum to yield colorless solution. Solid Content= 50%.

### Example-2

### The Synthesis of UV Curable Anionic Poly(Hydroxyurethane) Dispersion:

100g of Anionic Bicyclic Carbonate Solution (Example-1), 55g of Aminopropyl Terminates PDMS (from Gelest, Mw=900 g/mol) and 200g of water were placed in reaction vessel. Then, the reaction mixture stirred and heated to 80°C until all amine content is consumed. Amine Value of the reaction mixture was determined by titration with HCl acid solution. Then, 3g of Photo Initiator (1-Hydroxy-cyclohexyl-phenyl-ketone, IRGACURE 184) was added to reaction mixture and stirred at 60°C until total dissolution of Photo Initiator. Blue-Light Yellow appearance, Solid Content=30%.

### Example-3

### The Synthesis of Cationic Bicyclic Carbonate Solution

100g of Ethylene Carbonate was placed to reaction vessel and stirred and heated to 60°C. Through dropping funnel, 83g of Triethylenetetramine was added dropwise into reaction over the period of 1 hour by keeping the temperature around 80-100C. After addition of Ethylene Carbonate finished, the mixture was stirred at 100°C until all carbonate peaks disappeared in FTIR. Then, through dropping funnel, 195g of Glycerol Carbonate Acrylate was added dropwise at between 60-80°C until all acrylate double bonds peaks totally disappeared in FTIR. Then, the mixture of Methacrylic Acid (98g) and water (480g) was added to reaction mixture at 50°C to prepare the solution. Solid Content= 50%.

### Example-4

### The Synthesis of UV Curable Cationic Poly(Hydroxyurethane) Dispersion

100g of Cationic Bicyclic Carbonate Solution (Example-3), 50g of Aminopropyl Terminates PDMS (from Gelest, Mw=900 g/mol) and 200g of water of water were placed in reaction vessel. Then, same reaction procedure was followed to obtain UV curable cationic dispersion. White-Light Yellow appearance. Solid Content=30%.

Thanks to the isocyanate-free polyurethane and isocyanate-free polyurethane-containing polymeric film production method developed with the present invention, strong ionic bonds are formed between oppositely charged polymeric structures by neutralizing polymerizable acid or tertiary amine functional monomers. Thus, anionic and cationic, water-based and ultraviolet (UV) curable non-isocyanate/non-containing polyurethane and polyurethane derivatives with anionic and cationic properties are synthesized in aqueous media and an isocyanate-free polyurethane is obtained which reduces production time, cost and production capacity limitations. In addition, an ultraviolet curable isocyanate-free polyurethane-based cross-linked polymeric film is obtained, which improves the mechanical properties of the film and provides an economical, fast and versatile polymeric film production method containing isocyanate-free polyurethane.

Other possible embodiments of this invention will be apparent to those skilled in the art upon consideration of this finding or from practice of the invention disclosed herein. While certain features of the invention have been illustrated and described herein, many modifications, substitutions, changes the principles, and equivalents will now occur to those of ordinary skill in the art. It is, therefore, to be understood that the appended claims are intended to cover all Such modifications and changes as fall within the true spirit of the invention.

## Claims

1. A method of producing an isocyanate-free polyurethane, which enables production of water-based isocyanate-free polyurethane derivatives with anionic properties and synthesis of the isocyanate-free polyurethane in water without using cosolvents and/or surface-active additives, the method comprising the steps of;
- adding a dianhydride functional agent, glycerol carbonate, a polymerizable neutralizing agent and a volatile solvent, and stirring the mixture under the boiling temperature of water, wherein the polymerizable neutralizing agent is a polymerizable tertiary amine functional monomer;
- synthesizing anionic bicyclic carbonate solution by the reaction of glycerol carbonate and dianhydride functional agent in the presence of polymerizable tertiary amine functional monomer, wherein the polymerizable tertiary amine functional monomer allows neutralization and the dianhydride ring to be opened by hydroxy group of glycerol carbonate to form ester bonds and allows the reaction to be synthesized in the volatile solvent that have a lower boiling point than water;
- adding water after the reaction to obtain an aqueous mixture then evaporating the solvent in the aqueous mixture and obtaining aqueous solution of anionic bicyclic carbonate-functional intermediate for the synthesis of isocyanate-free polyurethane;
- adding aminopropyl terminated polydimethylsiloxane and water to the anionic bicyclic carbonate-functional solution then stirring and heating under the boiling temperature of water until all amine content is consumed to obtain a polyurethane mixture.

2. A method of producing an isocyanate-free polyurethane according to claim 1, wherein the tertiary amine functional monomer is selected from methacrylate functional tertiary amine, carboxylic acid or another acid/base such as 2-N-Morpholinoethyl methacrylate, 2-Diisopropylaminoethyl methacrylate, N-[3-(N,N-Dimethylamino)propyl] methacrylamide, , N-[2-(N,N-Dimethylamino)ethyl] methacrylamide, 2-(N,N-Dimethylamino)ethyl methacrylate, 2-(N,N-Diethylamino)ethyl methacrylate, , 2-(tert-Butylamino)ethyl methacrylate, , 2-(N,N-Dimethylamino)ethyl methacrylate, Beta-Carboxyethyl methacrylate, 2-Sulfoethyl methacrylate or Methacrylic acid, Phosphorus-Based Poly(meth)acrylates and all related monomers.

3. A method of producing an isocyanate-free polyurethane according to claim 1, wherein the method comprising the step of stirring until all dianhydride peaks disappeared in Fourier transform infrared spectroscopy before adding water.

4. A method of producing an isocyanate-free polyurethane according to claim 1, wherein the dianhydride functional agent is selected from Di-anhydride derivatives such as 3,3',4,4'-Benzophenonetetracarboxylic dianhydride, 4,4'-Biphthalic Anhydride, 3,4,9,10-Perylenetetracarboxylic 3,4:9,10-dianhydride, Cyclobutane-1,2,3,4-tetracarboxylic dianhydride, 3,3',4,4'-Biphenyltetracarboxylic dianhydride, Benzophenone-3,3',4,4'-tetracarboxylic dianhydride, Bicyclo[2.2.2]oct-7-ene-2,3,5,6-tetracarboxylic dianhydride, 1,4,5,8-Naphthalenetetracarboxylic dianhydride, Tetrahydrofuran-2,3,4,5-tetracarboxylic Acid, Pyromellitic dianhydride, Perylene-3,4,9,10-tetracarboxylic dianhydride, 4,4'-Oxydiphthalic anhydride, 4,4'-(4,4'-Isopropylidenediphenoxy) bis(phthalic anhydride), and all related di-anhydride derivatives.

5. A method of producing a polymeric film comprising an isocyanate-free polyurethane of Claim 1, which enables obtaining an ultraviolet curable isocyanate-free polyurethane-based cross-linked polymeric film after thermal drying and improving mechanical properties of the obtained film, the method comprising the steps of;
- adding a photo initiator to the polyurethane mixture and continue stirring until the photo initiator dissolves completely,
- applying ultraviolet radiation curing and polymerizing the neutralizing agent to form two oppositely charged polymeric layers and increasing ionic interaction between the oppositely charged layers to obtain the polymeric film with improved mechanical properties.

6. A method of producing a polymeric film comprising isocyanate-free polyurethane according to claim 6, wherein the polymeric film is suitable for use in a coating application.

7. A method of producing a polymeric film comprising isocyanate-free polyurethane according to claim 6, comprising the step of polymerizing the neutralizing agent to form two oppositely charged polymeric layers by curing under daylight.

8. A method of producing a polymeric film comprising isocyanate-free polyurethane according to claim 6, wherein the mechanical properties are durability and flexibility.

9. A method of producing a polymeric film comprising isocyanate-free polyurethane according to claim 6, wherein the photo initiators are selected from Michler's ketone, anthraquinone, acridine, phenazine, benzophenone, Rose Bengal, Eosine, Erythrosine, Hexaarylbiimidazole, p-dialkylamino benzylidene ketone, 3-ketocoumarin, 4-thiazolidinone, 1-indanone, Riboflavin, Eosin-Y, Carboxylated Camphorquinone Acetophenone, Anisoin, Anthraquinone, Anthraquinone-2-sulfonic acid, sodium salt monohydrate, (Benzene) tricarbonylchromium, Benzil, Benzoin, Benzoin ethyl ether, Benzoin isobutyl ether, Benzoin methyl ether, Benzophenone, Benzophenone/1-Hydroxycyclohexylphenyl ketone, 1-Hydroxycyclohexyl phenyl ketone, 3,3',4,4'-Benzophenonetetracarboxylic dianhydride, 4-Benzoylbiphenyl, 2-Benzyl-2-(dimethylamino)-4'-morpholinobutyrophenone, 4,4'-Bis(diethylamino)benzophenone, 4,4'-Bis(dimethylamino)benzophenone, Camphorquinone, 2-Chlorothioxanthen-9-one, (Cumene) cyclopentadienyliron(ll) hexafluorophosphate, Dibenzosuberenone, 2,2-Diethoxyacetophenone, 4,4'-Dihydroxybenzophenone, 2,2-Dimethoxy-2-phenylacetophenone, 4-(Dimethylamino)benzophenone, 4,4'-Dimethylbenzil, 2,5-Dimethylbenzophenone, 3,4-Dimethylbenzophenone, Diphenyl(2,4,6trimethylbenzoyl)phosphine oxide / 2-Hydroxy-2-methylpropiophenone, 4'-Ethoxyacetophenone, Diphenyl(2,4,6 trimethylbenzoyl)phosphine oxide, Ethylanthraquinone, Ferrocene, 3'-Hydroxyacetophenone, 4'-Hydroxyacetophenone, 3-Hydroxybenzophenone, 4-Hydroxybenzophenone, 1-Hydroxycyclohexyl phenyl ketone, 2-Hydroxy-2-methylpropiophenone, 2-Hydroxybenzophenone, 3-Methylbenzophenone, Methybenzoylformate, 2-Methyl-4'-(methylthio)-2-morpholinopropiophenone, Phenanthrenequinone, 4'-Phenoxyacetophenone, Thioxanthen-9-one, Triarylsulfonium hexafluoroantimonate salts, Triarylsulfonium hexafluorophosphate salts, 2-Hydroxy-2-methyl-1- phenyl-1-propanone, 2-Hydroxy-1-[4-(2-hydroxyethoxy)phenyl]-2-methyl-1-propanone, Methylbenzoylformate, oxy-phenyl-acetic acid 2-[2 oxo-2 phenyl-acetoxy-ethoxy]-ethyl ester and oxy-phenyl-acetic 2-[2-hydroxy-ethoxy]-ethyl ester, Alpha, alpha-dimethoxy- alpha-phenylacetophenone, 2-Benzyl-2-(dimethylamino)-1-[4- (4-morpholinyl) phenyl]-1-butanone, 2-Methyl-1-[4-(methylthio)phenyl]-2-(4-morpholinyl)-1-propanone, Diphenyl (2,4,6-trimethylbenzoyl)- phosphine oxide, Phosphine oxide, phenyl bis (2,4,6-trimethyl benzoyl), Bis (eta 5-2,4-cyclopentadien-1-yl) Bis [2,6-difluoro-3-(1H-pyrrol-1-yl) phenyl]titanium, lodonium, (4-methylphenyl) [4-(2-methylpropyl) phenyl]- hexafluorophosphate(1-) and all possible mixture of photoinitiator and their modifications.
